# EUROPEAN PATENT SPECIFICATION

(11) **EP 2 684 595 B1**
(45) Date of publication and mention of the grant of the patent: **21.03.2018**
(21) Application number: 12747482.3
(22) Date of filing: 14.02.2012
(51) Int. Cl.: B01D 53/62, B01D 53/14, B01D 53/34, B01D 53/50, B01D 53/77, B01D 53/00

(54) **METHOD FOR CONTROLLING A SYSTEM FOR CHEMICALLY ABSORBING CO2 AND SYSTEM FOR CHEMICALLY ABSORBING CO2**
VERFAHREN ZUR STEUERUNG EINES SYSTEMS ZUR CHEMISCHEN CO2-ABSORPTION UND SYSTEM ZUR CHEMISCHEN CO2-ABSORPTION
PROCÉDÉ DE RÉGULATION D'UN SYSTÈME D'ABSORPTION CHIMIQUE DE CO2 ET SYSTÈME D'ABSORPTION CHIMIQUE DE CO2

(30) Priority: 14.02.2011 JP 2011028770
(43) Date of publication of application: 15.01.2014
(73) Proprietor: Mitsubishi Hitachi Power Systems, Ltd., Yokohama 220-8401 (JP)
(72) Inventor: SHIMAMURA, Jun, Kure-shi Hiroshima 737-0029 (JP)
(74) Representative: Jenkins, Peter David
(86) International application number: PCT/JP2012/053349
(87) International publication number: WO 2012/111648

(56) References cited:
- WO-A1-2009/104744
- WO-A1-2010/102877
- WO-A1-2010/142716
- JP-A- 2003 053 134
- JP-A- 2006 218 415
- JP-A- 2010 201 422
- US-A1- 2006 286 017

## Description

### TECHNICAL FIELD

The present invention relates to a method of controlling a carbon dioxide (CO₂) chemical absorption system. In particular, the present invention relates to a method of controlling a carbon dioxide (CO₂) chemical absorption system comprising a distillation reclaimer, the method allowing the system to be operated with minimum makeup water while maintaining a water balance in CO₂ recovery equipment. WO 2010/142716 discloses a method for reclaiming CO₂ absorbing chemical(s) from a lean aqueous CO₂ absorbent leaving a regeneration column.

### BACKGROUND ART

In recent years, in thermal power generation facilities and boiler equipment, a large amount of coal, heavy oil and the like are used as fuel, raising an issue of extensive discharge of CO₂ to the atmosphere in terms of air pollution and global warming. For one of the separation and recovery technologies of CO₂, a chemical absorption method using an amine compound such as alkanolamine is widely known.

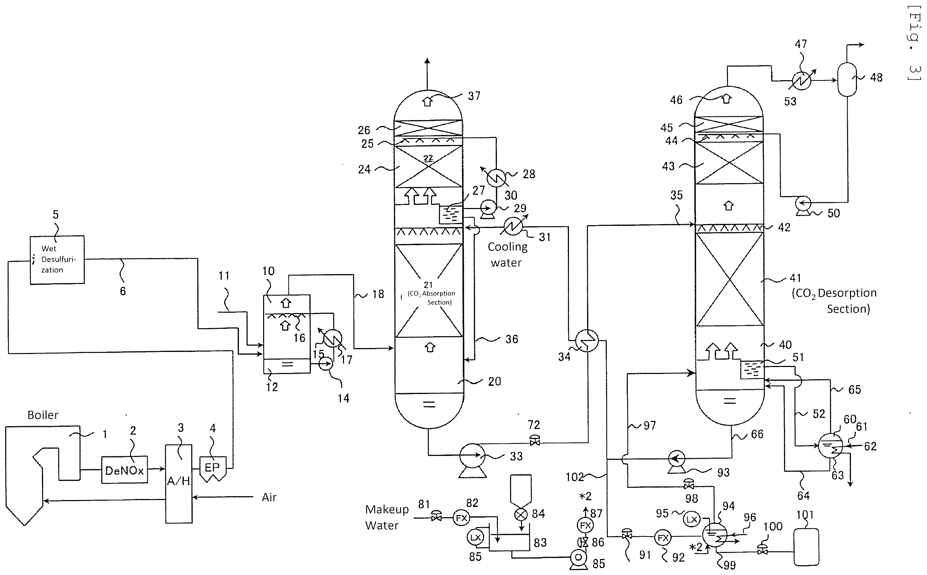

Fig. 3 shows a power generation plant comprising a conventional CO₂ chemical absorption system. The power generation plant mainly comprises Boiler 1, Denitration Device 2, Air Heater 3, Electrostatic Precipitator 4, Wet Desulfurization Device 5, Pre-scrubber 10, CO₂ Absorber Column 20, Desorber Column 40, Reboiler 60 and the like. Combustion exhaust gas generated by combustion of fossil fuels such as coal and discharged from Boiler 1 is passed through Denitration Device 2 to remove nitrogen oxide, and then passed through Air Heater 3 for heat exchange and cooled down to, for example, 120 °C to 170 °C. The exhaust gas passed through Air Heater 3 is passed through Electrostatic Precipitator 4 to remove soot dust in the exhaust gas, and further pressurized by an induced draft fan, and then subjected to Wet Desulfurization Device 5 to remove sulfur oxide (SO₂). About 10 ppm of SO₂ usually remains in the outlet gas from Wet Desulfurization Device 5. In order to prevent deterioration of CO₂ absorbent in CO₂ Absorber Column 20 by the residual SO₂, Pre-scrubber 10 is provided as a pretreatment device for CO₂ chemical absorption equipment to reduce the amount of residual SO₂ as much as possible at this stage (for example, 1 ppm or less).

CO₂ Absorber Column 20 comprises Packed Bed 21, which is a main CO₂ absorbing section, Absorbent Spray Section 22, Water Washing Section 24, Washing Water Spray Section 25, Demister 26, Washing Water Reservoir 27, Condenser 28 and Washing Water Pump 29. CO₂ contained in exhaust gas is absorbed into CO₂ absorbent in Packed Bed 21 by gas-liquid contacts with CO₂ absorbent supplied from a CO₂ absorbent spray section located at the upper part of CO₂ Absorber Column 20. In Water Washing Section 24, De-CO₂ Gas 23 heated by the exothermic reaction of absorption is cooled, and mist coming along with the gas is removed. Further, washing water cooled by Condenser 28 is recirculated for use through Washing Water Pump 29. After removing mist coming along with the gas by Demister 26 provided above Water Washing Section 24, the gas is discharged out of the system as Treated Gas 37 (de-CO₂ gas).

The CO₂ absorbed absorbent is withdrawn from a liquid reservoir provided at the lower part of Absorber Column 20 with Absorber Column Withdrawal Pump 33, heated by Heat Exchanger 34 and then passed to Desorber Column 40. In Desorber Column 40, the CO₂ enriched absorbent which is sprayed from Spray Section 42 is fed to Packed Bed 41. Meanwhile, vapor is supplied to the bottom of Desorber Column 40 from Reboiler 60 via Vapor Supply Line 65. In Packed Bed 41, the CO₂ enriched absorbent makes gas-liquid contacts with vapor coming up from the bottom to degas CO₂ in the absorbent to the gas phase. Mist of some absorbent coming along with the degassed CO₂ gas is removed with Water Washing Section 43. Demister 45 provided above Water Washing Section 43 removes the mist coming along with the gas from Water Washing Section 43 and the like, and then the gas is discharged from the top of Desorber Column 40 as CO₂ Gas 46. Then, the CO₂ gas is cooled down to about 40°C in Condenser 47, and then separated into gas and condensed water in CO₂ Separator 48. The separated CO₂ gas is introduced to CO₂ Liquefying Device (not shown) while the condensed water is supplied to Water Spray Section 44 in Desorber Column 40 through Line 49 by Drain Pump 50.

Meanwhile, the CO₂ absorbent from which CO₂ is degassed is pooled in Desorber Column Liquid Reservoir 51, and then passed to Reboiler 60 through Reboiler Liquid Feeding Line 52. A heat exchanger tube and the like is provided inside Reboiler 60, in which vapor is generated by indirectly heating the CO₂ absorbent with steam 62 supplied through a steam supply line. The vapor is then supplied to the desorber column through Vapor Supply Line 65. Steam 62 used in Reboiler 60 is returned to drain water in the heat exchanger tube, and collected. The CO₂ absorbent pooled in the liquid reservoir at the bottom of Desorber Column 40 is passed through Desorber Column Withdrawal Line 66 to Heat Exchanger 34 and Condenser 29 for cooling, and then returned to the CO₂ absorber column.

Meanwhile, most of slightly SO₂ contained in the exhaust gas fed to Absorber Column 20 reacts with CO₂ absorbent to form heat stable salts (abbreviated as HSS). Because the reaction is irreversible, the reactivity of the CO₂ absorbent and CO₂ is lost while HSS is dissolved and still present in the absorbent. Therefore, the equilibrium between amine and CO₂ is increasingly disturbed as the concentration of HSS increases, leading to increased CO₂ desorbing energy. To this end, Side Stream Regeneration Distiller (may be termed as a reclaimer) 94 is provided in order to remove this HSS. Some of absorbent in which heat stable salts are accumulated to some extent is withdrawn to Reclaimer 94 where inorganic alkali salts such as sodium carbonate (Na₂CO₃), potassium carbonate and the like are added through an inorganic alkali salt addition line to remove heat stable salts from absorbent as corresponding sulfates. Reclaimer 94 is operated as follows. First, the operation of CO₂ Absorber Equipment 20 is stopped. The CO₂ absorbent from which CO₂ is degassed is fed to Reclaimer 94 via Flowmeter 92 and Cutoff Valve 91. The flowmeter monitors an amount of liquid introduced to Reclaimer 94 with Pump 93. The CO₂ absorbent is monitored for a water level with Level Transmitter 95 provided in Reclaimer 94, and fed until fully filled. Upon filled to the full capacity, Cutoff Valve 91 is closed. By pre-feeding a Na based alkali solution such as Na₂CO₃ in Reclaimer 94, HSS in an amine solution reacts with the alkali solution, i.e., S attached to amine dissociates to give Na₂SO₄. Next, by opening Cutoff Valve 98 to supply high temperature steam via Steam Supply Line 96, the CO₂ absorbent is allowed to be boiled and evaporated. The temperature of the steam supplied to Reclaimer 94 through Steam Supply Line 96 is usually higher than that used in Reboiler 60 in order to separate amine from Na₂SO₄ by boiling and evaporating amine. The temperature of the steam for Reboiler 60 is selected in order to avoid pyrolysis of amine. The evaporated CO₂ absorbent is returned to Desorber Column 40 through Amine Vapor Line 97. The amine absorbent ascending along Desorber Column 40 is cooled in Water Washing Section 43, and further cooled down to about 40°C in Condenser 47 to be liquefied. Then it is returned to Desorber Column 40 after passed through CO₂ Separator 48 and Drain Pump 50. Meanwhile, in Reclaimer 94, Na₂SO₄ is gradually concentrated while amine and the like is evaporated. When a water level falls to a specified level, the steam supply to Reclaimer 94 is stopped. Cutoff Valve 98 is closed, and Cutoff Valve 100 provided at Amine Waste Line 99 is opened to discharge amine waste containing Na₂SO₄ to Amine Waste Tank 101.

In the reclaimer, for example, a base such Na₂CO₃ is introduced, and amine and Na₂SO₄ are separated. Na₂SO₄ is discharged out of the system while amine absorbent is returned to the absorber column. In this case, quantitative feeding of Na₂CO₃ and the like is difficult from an engineering standpoint because Na₂CO₃ is in a form of powder. Therefore, Na₂CO₃ is first dissolved in water in a buffer tank and the like, and then introduced to the system as an aqueous solution.

Meanwhile, with regard to a water balance in the CO₂ recovery equipment, inlet gas is usually saturated at 40°C while outlet gas from the absorber column and the desorber column is also saturated at the same temperature of 40°C. Therefore, almost no additional water is supplied. Specifically, only about 50 kg/h of makeup water can be added for a CO₂ recovery plant of about 100 t/d. A processing speed of a reclaimer is usually less than 1% of the amine circulation volume to circulate. In the case that the volume is set to 0.5% and a concentration of HSS in a system is 2 wt%, about 10 kg/h of Na₂CO₃ is required. To dissolve this amount of Na₂CO₃ in water, about 3 times of that weight, i.e. 30 kg/h of water is required. Adding more makeup water to the system is difficult in view of amine supply and prevention of amine concentration in washing water used for Water Washing Section 24.

### SUMMARY OF THE INVENTION

### PROBLEMS TO BE RESOLVED BY THE INVENTION

In the above-mentioned conventional art, with regard to a water balance in the recovery equipment, inlet gas is saturated at 40°C while outlet gas from the absorber column and the desorber column is also saturated at the same temperature of 40°C. Therefore, a problem is that almost no makeup water can be supplied. Further, another problem is that adding more makeup water to the system is difficult in view of amine supply and prevention of amine concentration in washing water used for Water Washing Section 24. Therefore, there have been the following problems. In order to operate a reclaimer under these circumstances, a water balance in CO₂ absorption equipment has to be disregarded. Alternatively, in order to maintain a water balance, temperature of outlet gas has to be changed to increase an amount of released water. Changing a water balance and reducing a concentration of amine is not preferable because excess water needs to be heated in a desorber column and an increased amount of steam 62 is required, resulting in an increased utility cost.

An object of the present invention is to solve a problem of a water balance associated with operation of a reclaimer in a CO₂ absorption system having the conventional reclaimer to minimize water supply from the outside of the system so that the CO₂ absorption system is kept in optimal conditions.

### MEANS FOR SOLVING THE PROBLEMS

Referring to the conventional system in Fig. 3, the above object is achieved by rerouting condensed water separated in CO₂ Separator 48 to Adjustment Tank 83 to pool some of drain water which is otherwise returned to Desorber Column 40 via Drain Line 49 and Drain Pump 50 to the Water Washing Spray Section 44; adjusting a liquid level in Adjustment Tank 83 with Flow Regulating Valve 81; introducing a solid base such as Na₂CO₃ through Feeder 84 having weight monitoring capability to adjust a concentration of a Na₂CO₃ solution; and feeding an appropriate amount of the Na₂CO₃ solution depending on an amount of HSS in absorbent to Reclaimer 94 or Amine Supply Line 102 upstream of Reclaimer 94.

That is, the inventions claimed in the present application are as follows.
(1) A method of controlling a CO₂ chemical absorption system as recited in claim 1 and a CO₂ chemical absorption system as recited in claim 3.
(2) The method according to (1) further comprising: temporarily pooling the condensed water in the adjustment tank; adding inorganic alkali to the adjustment tank to adjust a concentration of the inorganic alkali and a liquid level; and then adjusting an amount of the inorganic alkali salt solution in the adjustment tank, depending on a concentration of the heat stable salts in the CO₂-released amine absorbent to be withdrawn from the CO₂ desorber column to the reclaimer.

### ADVANTAGEOUS EFECTS OF THE INVENTION

According to the present invention, a water balance in a system can be kept constant similarly as when a reclaimer is not operated because there is no water supply from the outside of the system. The water supply from the outside of the system is a factor responsible for a disturbed water balance. Therefore the CO₂ absorption system can be stably operated.

### BRIEF DESCRIPTION OF THE DRAWINGS

Fig. 1 is an explanatory diagram of a CO₂ absorption system showing one Embodiment of the present invention.
Fig. 2 is an explanatory diagram of a CO₂ absorption system showing another Embodiment of the present invention.
Fig. 3 is an explanatory diagram showing a conventional CO₂ absorption system.

### EMBODIMENTS FOR CARRYING OUT THE INVENTION

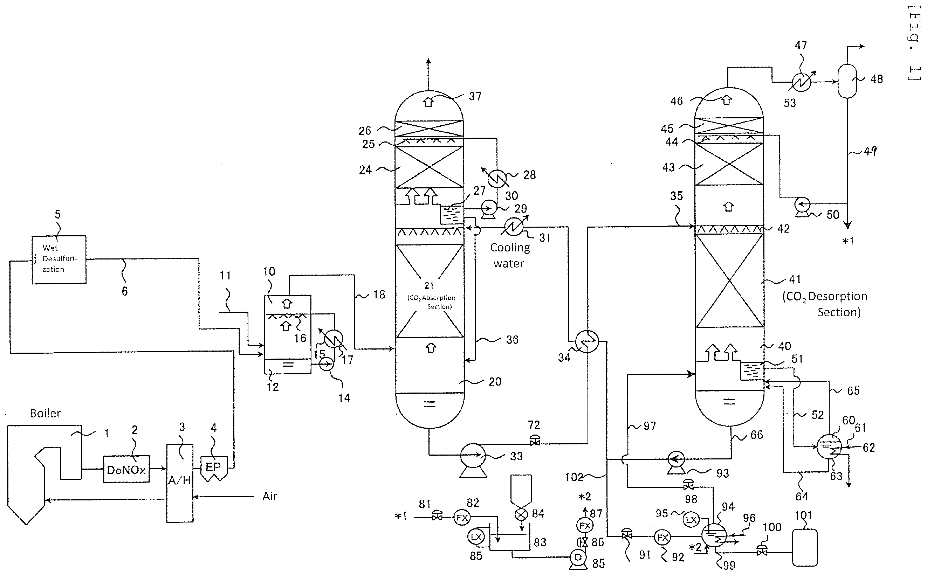

Fig. 1 is an explanatory diagram of a CO₂ absorption system showing one Embodiment of the present invention. The present invention differs from the conventional system in Fig. 3 in that instead of supplying water from the outside, some of drain water separated in CO₂ separator 48 and present in Line 49 is pooled in Reservoir Tank 83 depending on a liquid level, and a solid base such as Na₂CO₃ is introduced into Tank 83, and an appropriate amount of Na₂CO₃ solution is supplied to Reclaimer 94 depending on an amount of HSS in absorbent.

For drain water separated in CO₂ separator 48, which is otherwise returned to Desorber Column 40 via Water Washing Spray Section 44, some of it is pooled via Drain Line 49 depending on a liquid level of Reservoir Tank 83 through Flow Regulating Valve 81. An inorganic alkali salt (for example, Na₂CO₃) is introduced into Reservoir Tank 83 through Feeder 84 having weight monitoring capability. A flow rate of drain water is usually monitored with Flowmeter 82, but Level Indicator 85 may also be used for monitoring. The concentration of Na₂CO₃ in absorbent is adjusted by the flow rate of drain water and Na₂CO₃ supply, but the concentration may be measured and adjusted by sampling. Depending on the amount of HSS in absorbent, an appropriate amount of the Na₂CO₃ solution is supplied to Reclaimer 94 through Feed Pump 85 while monitoring a feeding mount with Flowmeter 87 so that the amount of HHS is not higher than a predetermined level.

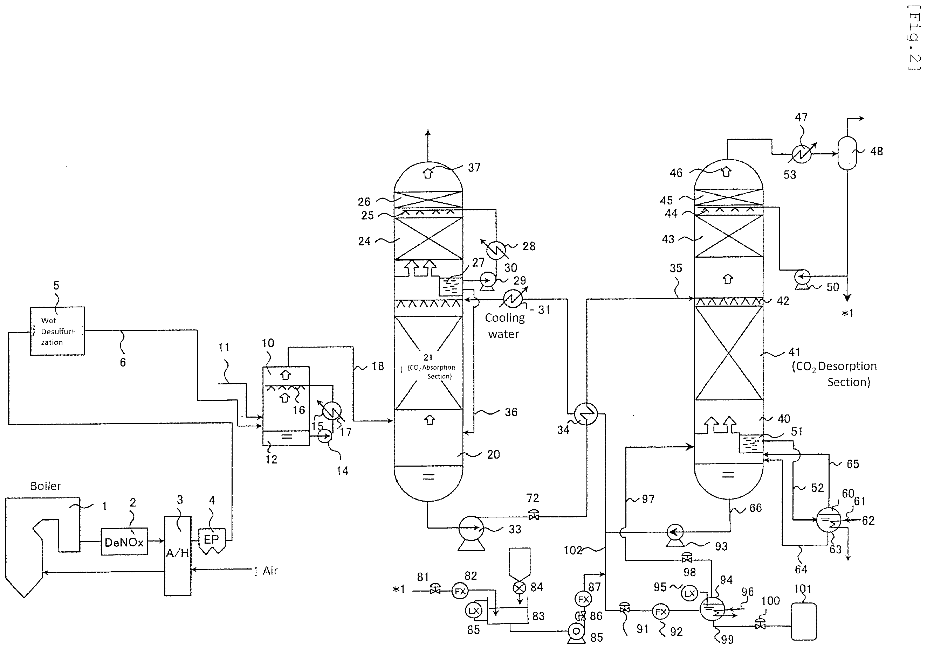

Fig. 2 shows another Embodiment of the present invention in which a feeding position is different from that of Embodiment in Fig. 1. The Na₂CO₃ solution is fed to Amine Feeding Line 102 upstream of Reclaimer 94 instead of Reclaimer 94.

The CO₂ absorption systems of Figs. 1 and 2 have solved the problem of a water balance associated with operation of the reclaimer in the conventional system shown in Fig. 3. Even if there is no water supply from the outside of the system, the CO₂ absorption systems can be operated under optimal conditions.

### EXPLANATION OF SYMBOLS

1: Boiler 2: Denitration Device 3: Air Heater
4: Dry Electrostatic Precipitator
5: Wet Desulfurization Device
6: Exhaust Gas from Desulfurization Outlet
10: Pre-scrubber 11: Absorbent
12: Liquid Reservoir 14: Circulating Pump
15: Condenser 16: Spray Section 17: Cooling Water
18: Pre-scrubber Outlet Gas 20: Absorber Column
21: Packed Bed 22: Absorbent Spray Section
23: De-CO₂ Gas 24: Water Washing Section
25: Washing Water Spray Section 26: Demister
27: Absorber Column Washing Water Reservoir
28: Condenser 29: Washing Water Pump
30: Cooling Water 31: Condenser 32: Boiler Water
33: Absorber Column Withdrawal Pump
34: Heat Exchanger
35: Desorber Column Liquid Feeding Line
36: Washing Water Withdrawal Line
37: Treated Gas 40: Desorber Column 41: Packed Bed
42: Spray Section 43: Water Washing Section
44: Washing Water Spray Section 45: Demister
46: CO₂ Gas 47: Condenser 48: CO₂ Separator
49: Drain Line 50: Drain Pump
51: Desorber Column Liquid Reservoir
52: Reboiler Liquid Supply Line
53: Cooling Water 60: Reboiler
61: Steam Supply Line 62: Steam
63: Reboiler Liquid Reservoir
64: Reboiler Liquid Withdrawal Line
65: Vapor Supply Line
66: Desorber Column Liquid Withdrawal Line
67: Condensed Water Drum 68: Bypass Valve
69: Condensed Water Pump 70: Heat Exchanger Tube
71: Condensed Water Returning Line
81: Flow Regulating Valve 82: Flowmeter
83: Adjustment Tank 84: Feeder 85: Feeding Pump
86: Flowmeter 91: Cutoff Valve 92: Flowmeter
93: Pump 94: Reclaimer 95: Level Detector
96: Steam Supply Line 97: Amine Vapor Line
98: Cutoff Valve 99: Waste Amine Line
100: Cutoff Valve 101: Waste Amine Tank
102: Amine Supply Line

## Claims

1. A method for controlling a CO₂ chemical absorption system comprising a CO₂ chemical absorption equipment and an absorbent regeneration equipment, the method comprising:
(a)removing sulfur oxides in an exhaust gas discharged from a combustion equipment (1) of fossil fuel by a flue gas desulfurization device (5) to obtain a desulfurized exhaust gas containing carbon dioxide (CO₂),
(b) contacting an amine absorbent with the desulfurized exhaust gas containing CO₂ in a CO₂ absorber column (20) to absorb the CO₂ into the amine absorbent and obtain a CO₂-absorbed amine absorbent,
(c) heating the CO₂-absorbed amine absorbent in a CO₂ desorber column (40) to release the CO₂ from the CO₂-absorbed amine absorbent and obtain a CO₂-released amine adsorbent,
(d) cooling the CO₂ released from the CO₂-absorbed amine absorbent to separate a condensed water,
(e) circulating the condensed water to the CO₂ desorber column,
(f) heating the CO₂-released amine absorbent through a reboiler (60) for circulation in the CO₂ desorber column,
(g) heat exchanging the CO₂-released amine absorbent withdrawn from the CO₂ desorber column with the CO₂-absorbed amine absorbent to be supplied to the CO₂ desorber column for circulation in the CO₂ desorber column,
(h)withdrawing the CO₂-released amine absorbent from the CO₂ desorber column to a reclaimer (94) of the absorbent regeneration equipment,
(i) rerouting some of the condensed water to an adjustment tank (83) of the absorbent regeneration equipment,
(j) preparing an inorganic alkali salt solution using the condensed water in the adjustment tank,
(k) adding the inorganic alkali salt solution to the CO₂-released amine absorbent withdrawn from the CO₂ desorber column,
(1) removing heat stable salts accumulated in the CO₂-released amine absorbent by a distillation process in the reclaimer,
(m) supplying vapor of the CO₂-released amine absorbent resulting from the distillation process from the reclaimer to the CO₂ desorber column.

2. The method according to claim 1, wherein in step (j), the preparation of the inorganic alkali salt solution using the condensed water in the adjustment tank (83) comprises:
(1) temporarily pooling the condensed water in the adjustment tank;
(2)adding inorganic alkali to the adjustment tank to adjust a concentration of the inorganic alkali and a liquid level; and then
(3) adjusting an amount of the inorganic alkali salt solution in the adjustment tank, depending on a concentration of the heat stable salts in the CO₂-released amine absorbent to be withdrawn from the CO₂ desorber column (40) to the reclaimer (94).

3. A CO₂ chemical absorption system comprising a CO₂ chemical absorption equipment and an absorbent regeneration equipment;
the CO₂ chemical absorption equipment comprising:
a flue gas desulfurization device (5) for removing sulfur oxides in an exhaust gas discharged from a combustion equipment (1) of fossil fuel to obtain a desulfurized exhaust gas containing CO₂,
a CO₂ absorber column (20) for bringing an amine absorbent in contact with the desulfurized exhaust gas containing CO₂ to absorb the CO₂ into the amine absorbent and obtain a CO₂-absorbed amine absorbent,
a CO₂ desorber column (40) for heating the CO₂-absorbed amine absorbent to release the CO₂ from the CO₂-absorbed amine absorbent and obtain a CO₂-released amine absorbent,
a condenser (47) for cooling the CO₂ released from the CO₂-absorbed amine absorbent to separate a condensed water,
a line for circulating the condensed water to the CO₂ desorber column,
a reboiler (60) for heating the CO₂-released amine absorbent for circulation in the CO₂ desorber column, and
a heat-exchanger (34) for heat-exchanging the CO₂-released amine absorbent withdrawn from the CO₂ desorber column with the CO₂-absorbed amine absorbent to be supplied to the CO₂ desorber column for circulation in then CO₂ desorber column, and
the absorbent regeneration equipment comprising:
an adjustment tank (83) for preparing an inorganic alkali salt solution using the condensed water,
a reclaimer (94) for removing heat stable salts accumulated in the CO₂-released amine absorbent by a distillation process,
a line (*1) for rerouting some of the condensed water from the condenser to the adjustment tank,
a line (102) for withdrawing the CO₂-released amine absorbent from the CO₂ desorber column to the reclaimer,
a line (97) for supplying vapor of the CO₂-released amine absorbent resulting from the distillation process from the reclaimer to the CO₂ desorber column, and
a line for adding the inorganic alkali salt solution to the CO₂-released amine absorbent withdrawn from the CO₂ desorber column.

## Patentansprüche

1. Verfahren zum Steuern eines chemischen CO₂-Absorptionssystems, das eine chemische CO₂-Absorptionsausrüstung und eine Absorptionsmittel-Regenerationsausrüstung umfasst, wobei das Verfahren Folgendes beinhaltet:
a) Entfernen von Schwefeloxiden in einem aus einer Verbrennungsausrüstung (1) von fossilem Brennstoff abgelassenem Abgas durch ein Rauchgasentschwefelungsgerät (5), um ein Kohlendioxid (CO₂) enthaltendes entschwefeltes Abgas zu gewinnen,
b) Inkontaktbringen eines Aminabsorptionsmittels mit dem CO₂ enthaltenden entschwefelten Abgas in einer CO₂-Absorberkolonne (20) zum Absorbieren des CO₂ in das Aminabsorptionsmittel und zum Gewinnen eines CO₂-absorbierten Aminabsorptionsmittels,
c) Erhitzen des CO₂-absorbierten Aminabsorptionsmittels in einer CO₂-Desorberkolonne (40) zum Freisetzen des CO₂ aus dem CO₂-absorbierten Aminabsorptionsmittel und zum Gewinnen eines CO₂-freigesetzten Aminabsorptionsmittels,
d) Kühlen des aus dem CO₂-absorbierten Aminabsorptionsmittel freigesetzten CO₂ zum Abscheiden von kondensiertem Wasser,
e) Zirkulieren des kondensierten Wassers zu der CO₂-Desorberkolonne,
f) Erhitzen des CO₂-freigesetzten Aminabsorptionsmittels durch einen Reboiler (60) zum Zirkulieren in der CO₂-Desorberkolonne,
g) Wärmetauschen des aus der CO₂-Desorberkolonne abgezogenen CO₂-freigesetzten Aminabsorptionsmittels mit dem CO₂-absorbierten Aminabsorptionsmittel, das der CO₂-Desorberkolonne zum Zirkulieren in der CO₂-Desorberkolonne zuzuführen ist,
h) Abziehen des CO₂-freigesetzten Aminabsorptionsmittels aus der CO₂-Desorberkolonne zu einem Reclaimer (94) der Absorptionsmittel-Regenerationsausrüstung,
i) Umleiten eines Teils des kondensierten Wassers zu einem Einstelltank (83) der Absorptionsmittel-Regenerationsausrüstung,
j) Herstellen einer anorganischen Alkalisalzlösung mit dem kondensierter Wasser in dem Einstelltank,
k) Zugeben der anorganischen Alkalisalzlösung zu dem aus der CO₂-Desorberkolonne abgezogenen CO₂-freigesetzten Aminabsorptionsmittel,
l) Entfernen von in dem CO₂-freigesetzten Aminabsorptionsmittel angesammelten wärmestabilen Salzen durch einen Destillationsprozess im Reclaimer,
m) Zuführen von Dampf des aus dem Destillationsprozess resultierenden CO₂-freigesetzten Aminabsorptionsmittels vom Reclaimer zur CO₂-Desorberkolonne.

2. Verfahren nach Anspruch 1, wobei in Schritt j) die Herstellung der anorganischen Alkalisalzlösung mit dem kondensierten Wasser im Einstelltank (83) Folgendes beinhaltet:
1) vorübergehendes Sammeln des kondensierten Wassers in dem Einstelltank;
2) Zugeben von anorganischem Alkali zu dem Einstelltank zum Einstellen einer Konzentration des anorganischen Alkali und eines Flüssigkeitspegels; und dann
3) Einstellen einer Menge der anorganischen Alkalisalzlösung in dem Einstelltank je nach Konzentration der wärmestabilen Salze in dem CO₂-freigesetzten Aminabsorptionsmittel, das aus der CO₂-Desorberkolonne (40) zum Reclaimer (94) abgezogen werden soll.

3. Chemisches CO₂-Absorptionssystem, das eine chemische CO₂-Absorptionsausrüstung und eine Absorptionsmittel-Generationsausrüstung umfasst;
wobei die chemische CO₂-Absorptionsausrüstung Folgendes umfasst:
ein Rauchgasentschwefelungsgerät (5) zum Entfernen von Schwefeloxiden in einem aus einer Verbrennungsausrüstung (1) von fossilem Brennstoff abgelassenem Abgas, um ein CO₂ enthaltendes entschwefeltes Abgas zu gewinnen,
eine CO₂-Absorberkolonne (20) zum Inkontaktbringen eines Aminabsorptionsmittels mit dem CO₂ enthaltenden entschwefelten Abgas, um das CO₂ in das Aminabsorptionsmittel zu absorbieren und ein CO₂-absorbiertes Aminabsorptionsmittel zu gewinnen,
eine CO₂-Desorberkolonne (40) zum Erhitzen des CO₂-absorbierten Aminabsorptionsmittels, um das CO₂ aus dem CO₂-absorbierten Aminabsorptionsmittel freizusetzen und ein CO₂-freigesetztes Aminabsorptionsmittel zu gewinnen,
einen Kondensator (47) zum Kühlen des aus dem CO₂-absorbierten Aminabsorptionsmittel freigesetzten CO₂ zum Abscheiden von kondensiertem Wasser,
eine Leitung zum Zirkulieren des kondensierten Wassers zur CO₂-Desorberkolonne,
einen Reboiler (60) zum Erhitzen des CO₂-freigesetzten Aminabsorptionsmittels zum Zirkulieren in der CO₂-Desorberkolonne, und
einen Wärmetauscher (34) zum Wärmetauschen des aus der CO₂-Desorberkolonne abgezogenen CO₂-freigesetzten Aminabsorptionsmittels mit dem CO₂-absorbierten Aminabsorptionsmittel, das der CO₂-Desorberkolonne zum Zirkulieren in der CO₂-Desorberkolonne zuzuführen ist, und
wobei die Absorptionsmittel-Regenerationsausrüstung Folgendes umfasst:
einen Einstelltank (83) zum Herstellen einer anorganischen Alkalisalzlösung mit dem kondensierten Wasser,
einen Reclaimer (94) zum Entfernen von im CO₂-freigesetzten Aminabsorptionsmittel angesammelten wärmestabilen Salzen durch einen Destillationsprozess,
eine Leitung (*1) zum Umleiten eines Teils des kondensierten Wassers vom Kondensator in den Einstelltank,
eine Leitung (102) zum Abziehen des CO₂-freigesetzten Aminabsorptionsmittels aus der CO₂-Desorberkolonne zum Reclaimer,
eine Leitung (97) zum Zuführen von Dampf des aus dem Destillationsprozess resultierenden CO₂-freigesetzten Aminabsorptionsmittels aus dem Reclaimer zur CO₂-Desorberkolonne, und
eine Leitung zum Zugeben der anorganischen Alkalisalzlösung zu dem aus der CO₂-Desorberkolonne abgezogenen CO₂-freigesetzten Aminabsorptionsmittel.

## Revendications

1. Procédé de régulation d'un système d'absorption chimique du CO₂ comprenant un équipement d'absorption chimique du CO₂ et un équipement de régénération d'un absorbant, le procédé comprenant :
(a) l'élimination des oxydes de soufre dans un gaz de décharge libéré par un équipement servant à la combustion (1) d'un combustible fossile au moyen d'un dispositif de désulfuration des gaz de combustion (5) pour obtenir un gaz de décharge désulfurisé contenant du dioxyde de carbone (CO₂),
(b) la mise en contact d'un absorbant aminé avec le gaz de décharge désulfurisé contenant du CO₂ dans une colonne d'absorption du CO₂ (20) pour absorber le CO₂ dans l'absorbant aminé et obtenir un absorbant aminé riche en CO₂,
(c) le chauffage de l'absorbant aminé riche en CO₂ dans une colonne de désorption du CO₂ (40) pour libérer le CO₂ de l'absorbant aminé et obtenir un adsorbant aminé pauvre en CO₂,
(d) le refroidissement du CO₂ libéré de l'absorbant aminé riche en CO₂ pour séparer une eau condensée,
(e) le transfert de l'eau condensée dans la colonne de désorption du CO₂,
(f) le chauffage de l'adsorbant aminé pauvre en CO₂ au moyen d'un rebouilleur (60) pour le transférer dans la colonne de désorption du CO₂,
(g) l'échange de chaleur entre l'absorbant aminé pauvre en CO₂ soutiré de la colonne de désorption du CO₂ et l'absorbant aminé riche en CO₂ qui alimente la colonne de désorption du CO₂ pour le transférer dans la colonne de désorption du CO₂,
(h) le soutirage de l'absorbant aminé pauvre en CO₂ de la colonne de désorption du CO₂ et son transfert dans un récupérateur (94) de l'équipement de régénération de l'absorbant,
(i) le détournement d'une partie de l'eau condensée vers un réservoir d'ajustement (83) de l'équipement de régénération de l'absorbant,
(j) la préparation d'une solution d'un sel alcalin inorganique en utilisant l'eau condensée du réservoir d'ajustement,
(k) l'addition de la solution d'un sel inorganique alcalin à l'absorbant aminé pauvre en CO₂ soutiré de la colonne de désorption du CO₂,
(l) l'élimination des sels thermostables qui se sont accumulés dans l'absorbant aminé pauvre en CO₂ par un processus de distillation dans le récupérateur,
(m) l'acheminement de la vapeur de l'absorbant aminé pauvre en CO₂ résultant du processus de distillation depuis le récupérateur jusqu'à la colonne de désorption du CO₂.

2. Procédé selon la revendication 1 où, à l'étape (j), la préparation de la solution d'un sel alcalin inorganique utilisant l'eau condensée du réservoir d'ajustement (83) comprend :
(1) le regroupement temporaire de l'eau condensée dans le réservoir d'ajustement ;
(2) l'addition de l'alcalin inorganique au réservoir d'ajustement pour ajuster une concentration de l'alcalin inorganique et un niveau de liquide ; puis
(3) l'ajustement d'une quantité de la solution du sel alcalin inorganique dans le réservoir d'ajustement en fonction d'une concentration en les sels thermostables dans l'absorbant aminé pauvre en CO₂ à soutirer de la colonne de désorption du CO₂ (40) et à acheminer au récupérateur (94).

3. Système d'absorption chimique du CO₂ comprenant un équipement d'absorption chimique du CO₂ et un équipement de régénération d'un absorbant ;
l'équipement d'absorption chimique du CO₂ comprenant :
un dispositif de désulfurisation des gaz de combustion (5) servant à éliminer les oxydes de soufre dans un gaz de décharge libéré par un équipement servant à la combustion (1) d'un combustible fossile pour obtenir un gaz de décharge désulfurisé contenant du CO₂,
une colonne d'absorption du CO₂ (20) servant à amener un absorbant aminé en contact avec le gaz de décharge désulfurisé contenant du CO₂ pour absorber le CO₂ dans l'absorbant aminé et obtenir un absorbant aminé riche en CO₂,
une colonne de désorption du CO₂ (40) servant à chauffer l'absorbant aminé riche en CO₂ pour libérer le CO₂ de l'absorbant aminé et obtenir un adsorbant aminé pauvre en CO₂,
un condensateur (47) servant à refroidir le CO₂ libéré de l'absorbant aminé riche en CO₂ pour séparer une eau condensée,
une conduite servant à transférer l'eau condensée dans la colonne de désorption du CO₂,
un rebouilleur (60) servant à chauffer l'adsorbant aminé pauvre en CO₂ pour le transférer dans la colonne de désorption du CO₂ et
un échangeur de chaleur (34) servant à effectuer un échange de chaleur entre l'absorbant aminé pauvre en CO₂ soutiré de la colonne de désorption du CO₂ et l'absorbant aminé riche en CO₂ qui alimente la colonne de désorption du CO₂ pour le transférer dans la colonne de désorption du CO₂,
l'équipement de régénération comprenant :
un réservoir d'ajustement (83) servant à préparer une solution d'un sel alcalin inorganique en utilisant l'eau condensée,
un récupérateur (94) servant à éliminer les sels thermostables qui se sont accumulés dans l'absorbant aminé pauvre en CO₂ par un processus de distillation,
une conduite (*1) servant à détourner une partie de l'eau condensée du condensateur au réservoir d'ajustement,
une conduite (102) servant à soutirer l'absorbant aminé pauvre en CO₂ de la colonne de désorption du CO₂ et à le transférer dans le récupérateur (94),
une conduite (97) servant à acheminer la vapeur de l'absorbant aminé pauvre en CO₂ résultant du processus de distillation depuis le récupérateur jusqu'à la colonne de désorption du CO₂ ; et
une conduite servant à ajouter la solution d'un sel inorganique alcalin à l'absorbant aminé pauvre en CO₂ soutiré de la colonne de désorption du CO₂.
